Europäisches Patentamt

European Patent Office

Office européen des brevets

(19)

(11) Numéro de publication: **0 038 232**
**B1**

(12) **FASCICULE DE BREVET EUROPEEN**

(45) Date de publication du fascicule du brevet: **19.02.86**

(51) Int. Cl.⁴: **F 02 B 37/12**

(21) Numéro de dépôt: **81400450.3**

(22) Date de dépôt: **20.03.81**

(54) **Procédé et système de génération de puissance par moteur à combustion interne suralimenté.**

(30) Priorité: **21.03.80 FR 8006439**

(43) Date de publication de la demande:
**21.10.81 Bulletin 81/42**

(45) Mention de la délivrance du brevet:
**19.02.86 Bulletin 86/08**

(84) Etats contractants désignés:
**BE CH DE GB IT LI NL SE**

(56) Documents cités:
**DE-C- 801 596**
**FR-A-2 226 559**
**US-A-2 172 809**
**US-A-2 633 698**
**US-A-3 037 345**
**US-A-3 102 381**
**US-A-3 103 780**
**US-A-3 300 964**
**US-A-3 996 738**

(73) Titulaire: **SOCIETE D'ETUDES DE MACHINES THERMIQUES S.E.M.T.**
**2, Quai de Seine**
**F-93202 Saint-Denis (FR)**

(72) Inventeur: **Curtil, Rémi**
**1, Allée Auguste Renoir**
**F-95560 Montsoult (FR)**

(74) Mandataire: **Weinstein, Zinovi et al**
**Cabinet Z. WEINSTEIN 20, Avenue de Friedland**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Description

La présente invention concerne généralement et a essentiellement pour objet un procédé perfectionné de production d'énergie par un générateur de puissance comprenant: un système moteur volumétrique (ou à capsulisme) à combustion interne à pistons notamment alternatifs, tel qu'en particulier mais non exclusivement un moteur Diesel; un système compresseur d'air de suralimentation et un système formant turbomachine motrice appelé: ci-après système turbomoteur à gaz d'échappement, avec des couplages mécaniques et/ou pneumatiques (ou fluidiques) entre ces trois systèmes. L'invention se rapporte également à un nouveau système générateur de puissance pour l'exécution du procédé précité et elle vise, enfin, les diverses applications et utilisations résultant de la mise en oeuvre de ce procédé et de ce système ainsi que les divers ensembles équipements et installations pourvus de tels systèmes.

On connaît, notamment par le brevet américain No. 3 103 780 et le brevet allemand No. 801 596 un procédé de production d'énergie dans un système générateur de puissance, par amenée dans un moteur à combustion interne d'air comprimé dans un compresseur entraîné par une turbine fonctionnant aux gaz d'échappement du moteur, par prélèvement partiel d'air comprimé entre le compresseur et le moteur et addition de cet air comprimé aux gaz d'échappement avant leur entrée dans la turbine, et avec transmission de l'énergie thermique des gaz usés sortant de la turbine à l'air comprimé prélevé. Dans ce cas le débit dérivé d'air comprimé est réchauffé dans un échangeur de chaleur superficiel, c'est-à-dire sans mélange des gaz, échangeur de chaleur dont le fluide chaud est constitué par les gaz sortant de la turbine.

L'objet de la présente invention est d'utiliser l'énergie disponible contenu dans les gaz sortant de la turbine qui dans le cas ci-dessus est au moins en partie gaspillée, tout en proposant un système qui par rapport aux systèmes classiques est notamment avantageux du fait de son faible encombrement, de son insensibilité à l'encrassement et de son faible prix de revient.

Pour ce faire, la présente invention a pour objet un procédé de production d'énergie par un générateur de puissance comprenant: un système moteur volumétrique à combustion interne à pistons, un système compresseur d'air de suralimentation et un système turbomoteur à gaz d'échappement, avec des couplages mécaniques et/ou pneumatiques entre ces trois systèmes; ledit procédé étant du type consistant à prélever un débit dérivé d'air comprimé entre les systèmes respectivement compresseur et moteur volumétrique sur le débit total d'air comprimé refoulé par ledit système compresseur, et à ajouter ledit débit dérivé d'air comprimé aux gaz d'échappement du système moteur, entre la sortie de gaz des cylindres de celui-ci et avant la sortie de gaz du système turbomoteur, ainsi qu'à fournir un apport d'énergie, récupérée sur de l'énergie en provenance des gaz brûlés dans le système moteur volumétrique, aux gaz d'échappement par l'intermédiaire du débit dérivé d'air comprimé, et caractérisé en ce que l'apport d'énergie audit débit dérivé d'air comprimé s'effectue sous forme de chaleur et de force vive massique par mélange direct du débit d'air comprimé avec une partie du flux de gaz sortant du système turbomoteur, notamment par effet de trompe aspirant et entraînant ledit gas par ledit air comprimé agissant sous forme d'au moins un jet d'air.

Selon une autre caractéristique préférée de l'invention, au moins une partie du débit dérivé d'air comprimé, pourvue de l'apport d'énergie précité, est injectée sous un angle éventuellement variable sélectivement dans la volute de raccordement direct entre au moins un collecteur d'échappement du système moteur volumétrique et au moins une turbine du système turbomoteur, sensiblement au point de raccordement tangent de la trajectoire d'entrée des gaz d'échappement dans la volute avec le début de leur trajectoire courbe dans celle-ci, de façon à provoquer une déviation de ladite trajectoire par effet fluidique.

La présente invention a également pour objet un système générateur de puissance du type comprenant: un conduit de dérivation reliant la conduite de refoulement d'air comprimé du système compresseur à la voie d'écoulement des gaz d'échappement . du système moteur volumétrique. après la sortie de ceux-ci des cylindres moteur et un dispositif de récupération d'énergie en provenance de gaz brûlés du système moteur volumétrique et de transfert de cette énergie récupérée à une partie du flux d'air comprimé, ce dispositif étant traversé par une voie de passage d'air comprimé en dérivation et caractérisé en ce que ledit dispositif de récupération et de transfert d'énergie est constitué par au moins un éjecteur dont la tubulure d'aspiration de fluide entraîné est branchée sur une conduite de sortie de gaz du système turbomoteur.

Selon encore une autre caractéristique de l'invention, le conduit de dérivation précité est branché par son extrémité aval éventuellement de façon orientable ou angulairement réglable sur la volute de liaison directe d'au moins un collecteur d'échappement du système moteur volumétrique avec au moins une turbine du système turbomoteur, sensiblement au point de raccordement de la tubulure d'entrée rectiligne de la volute à l'extrémité adjacente de la voie de passage courbe dans cette volute.

L'invention sera mieux comprise et d'autres buts, caractéristiques, détails et avantages de celle-ci apparaîtront plus clairement à la lecture de la description explicative qui va suivre en se référant aux dessins schématiques annexés donnés uniquement à titre d'exemples non limitatifs illustrant un mode de réalisation spécifique actuellement préféré de l'invention et dans lesquels:

La figure 1 représente un schéma synoptique fonctionnel de la plupart du cas d'application de l'invention.

La figure 2 illustre un mode de réalisation de l'invention, dans lequel le débit dérivé d'air comprimé reçoit un apport d'énergie calorifique et massique par mélange, dans au moins un éjecteur ou analogue, d'une partie des gaz sortant d'au moins une turbine à gaz d'échappement.

Les figures 3 à 5 représentent un mode de réalisation particulier de l'invention dans lequel le débit dérivé d'air comprimé pourvu de son apport d'énergie est injecté dans la volute d'entrée d'au moins une turbine à gaz d'échappement, à savoir:

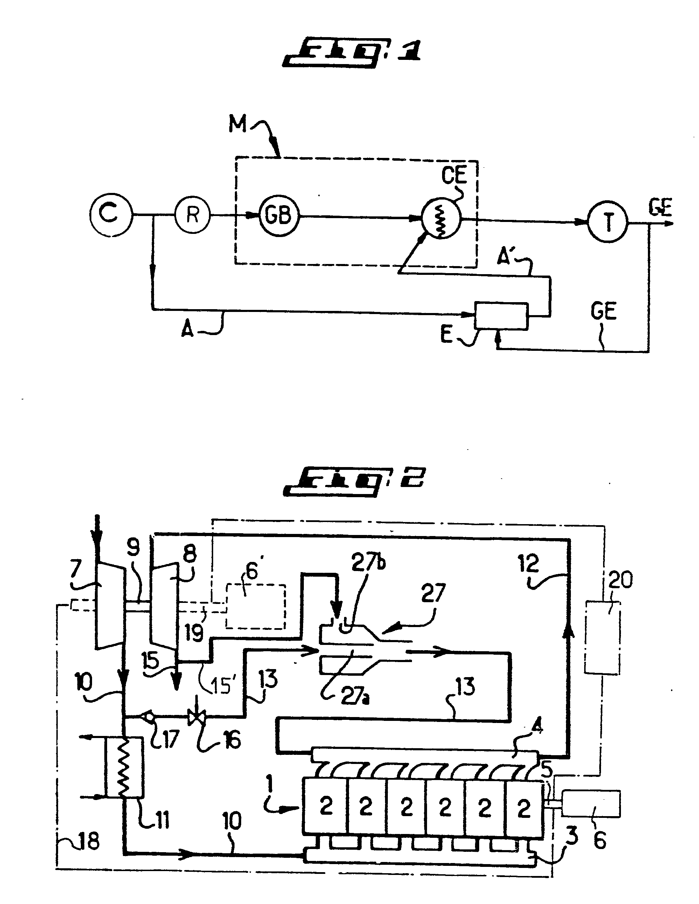

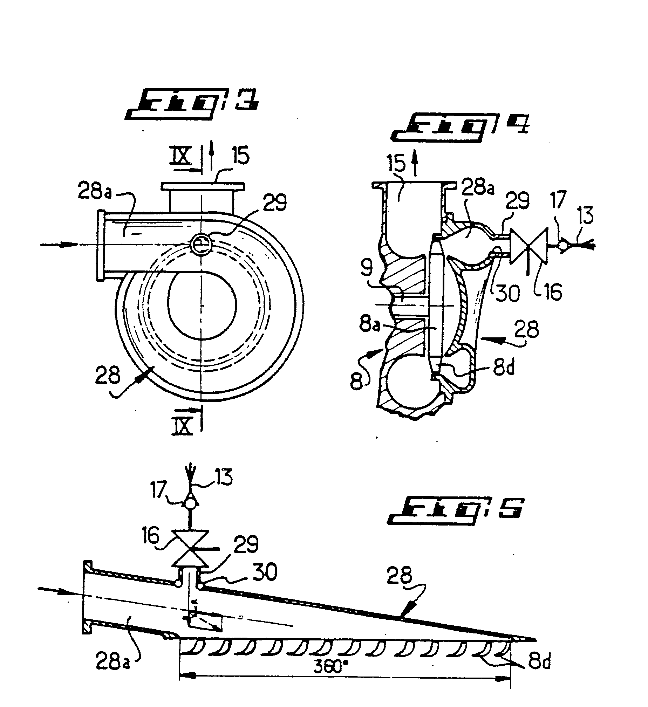

— la figure 3 est une vue de côté externe en élévation de la volute;
— la figure 5 est une vue fragmentaire en coupe transversale selon la ligne de section IX—IX de la figure 8 et
— la figure 5 est une vue en coupe partielle représentant le développement plan de la volute déroulée sur 360°.

Sur les différentes figures des dessins, les mêmes chiffres de références ou repères désignent des parties ou éléments de structure identiques ou semblables.

On se reportera d'abord à la figure 1 résumant, par un schéma synoptique fonctionnel d'ensemble, le cas exposé ci-après en y symbolisant seulement les divers circuits ou voies d'écoulement de fluides gazeux concernés; les lignes continues désignent les courants gazeux. Le repère C désigne le compresseur d'air de suralimentation, le flux d'air comprimé, sortant du compresseur, traversant un réfrigérant d'air final R pénétrant dans le moteur à combustion interne M par le collecteur d'admission de celui-ci, où il sert de comburant au combustible dont la combustion produits des gaz brûlés chauds GB dans les divers cylindres de travail du moteur. Ces gaz brûlés échauffent notamment par contact direct diverses parties ou pièces du moteur pour être recueillis sous forme de gaz d'échappement dans au moins un collecteur d'échappement CE par lequel ils quittent le moteur M (délimité dans le dessin par un cadre rectangulaire en traits interrompus) pour être amenés à au moins une turbine à gaz T destinée, dans certains cas particuliers mais non généralement, à entraîner un compresseur d'air C. Une telle turbine est constituée par une unité simple.

Selon le mode de réalisation préféré, le débit dérivé d'air comprimé A, prélevé à la sortie du compresseur C, mais avant le réfrigérant d'air R, traverse un éjecteur E où il est réchauffé par une partie des gaz GE sortant de la turbine T, traversant également l'éjecteur et qui s'y mélangent avec l'air comprimé. Le débit dérivé d'air comprimé réchauffé A' est alors injecté dans le collecteur d'échappement CE pour s'y mélanger aux gaz d'échappement alimentant la turbine.

Le mode préféré de réalisation de l'invention va être décrit ci-dessous. Dans les figures suivantes, tous les dispositifs ou appareils accessoire, qui ne font pas partie de l'invention et ne sont pas nécessaires à sa compréhension ont été omis.

L'exemple de réalisation, représenté sur la figure 2, montre un moteur à combustion interne tel qu'un moteur diesel 1 à au moins une rangée de cylindres en ligne 2, au nombre de six par exemple. Le moteur pourrait évidemment comporter plusieurs rangées de cylindres, par exemple deux rangées de cylindres disposées en V, auquel cas il y aurait avantageusement un groupe de suralimentation par rangée de cylindres. La ou chaque rangée de cylindres de ce moteur comporte un collecteur d'admission d'air 3 et au moins un collecteur d'échappement des gaz brulés 4 qui, dans le cas d'une rangée de quatre à dix cylindres, sera avantageusement unique par rangée et du type dit modulaire à convertisseur d'impulsions composé de tronçons identiques à section transversale de passage libre constante ou uniforme sur toute la longueur de collecteur. Un tel type de collecteur a été décrit notamment dans le brevet français principal No. 2 378 178 et dans ses premier et second certificats d'addition No. 2 415 200 et No. 2 464 366. Un tel collecteur d'échappement du type modulaire à convertisseur d'impulsions est fixé rigidement et directement à la sortie des gaz d'échappement de la culasse du moteur.

Le moteur 1, constituant le système moteur volumétrique précité ou faisant partie de celui-ci, est suralimenté par un système turbocompresseur à un étage dont le système compresseur d'air est directement entraîné mécaniquement par le système turbomoteur. Dans l'exemple représenté, le système compresseur d'air comprend un compresseur d'air 7 et le système turbomoteur comprend une turbine 8 directement accouplée mécaniquement au compresseur 7 par un arbre intermédiaire 9. L'orifice de sortie du compresseur est relié par une conduite de refoulement 10 au collecteur d'admission 3 du moteur 1 à travers un réfrigérant d'air terminal 11 pour le refroidissement de l'air comprimé de suralimentation du moteur et dont la voie de passage de fluide chaud à refroidir est montée en série dans cette conduite de refoulement. L'orifice d'entrée de gaz de la turbine 8 est relié par une conduite 12 à l'orifice de sortie du collecteur d'échappement 4 du moteur. Le débit dérivé d'air comprimé est prélevé ici avant le refroidissement d'air comprimé au moyen d'un conduit de dérivation d'air comprimé 13 branché par son extrémité amont sur la conduite de refoulement 10 avant le réfrigérant d'air comprimé 11 et, par son extrémité aval, sur l'extrémité par exemple amont du collecteur d'échappement 4, de façon que le débit dérivé d'air comprimé réchauffé soit injecté dans ce collecteur au point de plus basse pression instantanée des gaz d'échappement dans celui-ci. Ce lieu de recyclage d'air comprimé à l'extrémité amont du collecteur d'échappement est avantageux, car le premier cylindre du moteur peut éventuellement aspirer du fluide.

Le débit dérivé d'air comprimé est avantageusement réglable par variation sélective, notamment de façon à pouvoir être interrompu ou arrêté au démarrage du système moteur volumétrique lors de son fonctionnement à un niveau de puissance suffisament élévé pour que le rendement des systèmes respectivement turbomoteur et compresseur soit bon. A cet effet, le conduit de dérivation 13 est muni d'une vanne ou analogue 16 qui peut être soit du genre à fonctionnement par tout ou rien, soit à fermeture et à ouverture progressives (pour mieux faire croître le débit dérivé d'air comprimé avec une vitesse décroissante de rotation du moteur 1). Cette vanne devra être fermée au-delà d'un certain niveau de puissance, en ayant par exemple sa commande asservie à la valeur instantanée de la pression de refoulement d'air du compresseur ou de la pression d'admission d'air au moteur (car la pression d'air comprimé à la sortie du compresseur est au moins approximativement proportionnelle à la puissance du moteur dans un domaine de vitesses de rotation relativement étendu).

Pour éviter toute inversion du sens d'écoulement du débit dérivé d'air comprimé dans le conduit de dérivation 13, il est nécessaire que la pression des gaz d'échappement dans le collecteur d'échappement 4 soit inférieure à la pression d'air comprimé du conduit de dérivation 13 et, pour empêcher automatiquement une telle inversion du courant gazeux, un clapet de retenue ou une soupape anti-retour 17 est avantageusement monté dans le conduit de dérivation 13, de préférence avant la vanne 16. Lorsque la vanne 16 est du type à fonctionnement par tout ou rien, celle-ci devra être fermée notamment au démarrage du moteur 1 (c'est-à-dire lorsque la pression d'air d'admission est nulle) et aussi lorsque la pression des gaz dans le collecteur d'échappement devient supérieure à la pression d'air comprimé dans le conduit de dérivation 13, en particulier en l'absence d'un clapet de retenue ou d'une soupape anti-retour.

L'invention est avantageusement applicable à un générateur de puissance du type dit compound qui se compose généralement d'un moteur à combustion interne à pistons, d'au moins un compresseur d'air et d'au moins une turbine à gaz avec existence d'un couplage mécanique entre au moins deux de ces trois unités ainsi que d'un couplage gazeux au moins entre moteur et turbine et entre compresseur et moteur ainsi qu'éventuellement entre compresseur et turbine. La puissance mécanique utilisable de sortie peut ainsi être prise soit sur l'arbre du moteur, soit sur l'arbre de la turbine, soit simultanément sur les deux arbres (auquel cas, les puissances utiles recueillies respectivement sur les deux arbres sont mutuellement en fonction inverse l'une de l'autre). Dans le cas présent considéré du moteur dit compound formant générateur de gaz, le compresseur d'air de suralimentation 7 est directement accouplé mécaniquement par une liaison 18 (représentée par une ligne discontinue en traits interrompus mixtes sur la figure 2) à l'arbre 5 du moteur à combustion interne 1 qui n'entraîne alors plus directement la charge 6 tandis que la turbine 8 est alors mécaniquement séparée du groupe turbocompresseur seur 1, 7 (c'est-à-dire qu'elle n'est plus mécaniquement accouplée au compresseur). Dans ce cas, le compresseur 7 absorbe toute la puissance utile du moteur 1, laquelle est transmise, par l'intermédiaire de l'air comprimé refoulé par le compresseur et des gaz d'échappement du moteur, à la turbine 8 qui sert alors d'unique renvoi de puissance et entraîne ainsi l'appareil d'utilisation 6' par son arbre de sortie 19, eventuellement par l'intermédiaire d'un réducteur de vitesse. Une telle disposition oblige d'avoir un grand rapport de compression.

Pour éviter cela, il peut être avantageux d'absorber une partie de la puissance utile du moteur, 1 par l'intermédiaire d'un convertisseur de couple de préférence hydraulique 20 reliant la transmission mécanique entre moteur et compresseur à la transmission mécanique entre turbine et appareil d'utilisation. Il est ainsi éventuellement possible de combiner l'application au moteur compound avec le mode de réalisation représenté sur la figure 2 en prévoyant notamment une liaison déconnectable ou un accouplement débrayable non référencé sur l'arbre 9 entre compresseur 7 et turbine 8.

Il est à noter que, lorsque c'est la turbine qui fournit la totalité de la puissance utile, le moteur à combustion interne pourrait être eventuellement un moteur du type à pistons libres.

Dans l'exemple de réalisation selon la figure 2, l'apport d'énergie, au débit dérivé d'air comprimé, s'éffectue sous forme de chaleur et de force vive massique par mélange direct d'au moins la majeure partie du débit dérivé d'air comprimé avec une partie du flux de gaz sortant du système turbomoteur, notamment par l'effet de trompe aspirant et entraînant ledit gaz par ledit air comprimé agissant sous forme d'au moins un jet d'air A cet effet, il est prévu au moins un éjecteur 27 dont la voie d'écoulement de fluide d'entraînement 27a est intercalée en série dans le conduit de dérivation d'air comprimé 13 et dont la tubulure d'aspiration de fluide entraîné 27b est branchée de préférence par une canalisation de dérivation 15' sur une conduite 15 de sortie de gaz de la turbine 8. A la sortie de l'éjecteur 27, le mélange de gaz et d'air comprimé est amené par le conduit 13 de préférence au collecteur d'échappement 4 du moteur 1 selon la configuration déjà décrite.

Dans le mode de réalisation ci-dessus, la turbine est habituellement du type axial et son bâti d'entrée de gaz est généralement raccordé à la conduite d'arrivée des gaz d'échappement par un diffuseur, plus particulièrement dans le cas d'un collecteur d'échappement du type modulaire à convertisseur d'impulsions. Cependant il est avantageux, pour obtenir une meilleure utilisation de l'énergie cinétique des gaz, de conserver la vitesse élevée des gaz existant en aval du collecteur en supprimant le diffuseur précité et en reliant la sortie du collecteur d'échappement ou de la conduite d'amenée des gaz d'échappement à l'entrée de la turbine par une volute ou analogue 28 dont la-section d'écoulement des gaz diminue progressivement depuis l'entrée 28a de la volute jusqu'à la roue 8a de la turbine 8, comme cela est représenté sur les figures 3 et 4 des dessins. Cela implique la suppression du distributeur de la turbine, dont la fonction directrice est assurée par la volute; tandis que sa fonction accélaratrice est accomplie par le collecteur d'échappement. Une telle volute a été décrite dans le premier certificat d'addition No. 2 415 200 au brevet français principal No. 2 378 178. Dans ce dernier mode de réalisation, la liaison, entre la sortie du collecteur d'échappement 4 et la turbine axiale 8, s'effectue donc au moyen d'un bâti 28 d'entrée de gaz à la turbine, sans tuyère, en forme de volute, qui est monté sur le châssis ou corps de la turbine, de façon à recouvrir la roue de turbine 8a portant des ailettes radiales 8d. Comme déjà indiqué, cette volute 28 a une forme telle que sa section de passage des gaz décroît progressivement de telle sorte que la vitesse d'attaque de la roue 8a de la turbine par les gaz d'échappement soit constante sur tout le portour de cette roue.

Dans le mode de réalisation selon les figures 3 et 5, au moins une partie du débit dérivé d'air comprimé, pourvu de l'apport d'énergie précité, est injecté sous un angle α éventuellement variable sélectivement dans la volute 28 de raccordement direct entre au moins un collecteur d'échappement 4 du système moteur volumétrique 1 et au moins une turbine 8 du système turbomoteur, sensiblement au point de raccordement tangent de la trajectoire d'entrée des gaz d'échappement dans la volute avec le début de leur trajectoire courbe dans celle-ci, de façon à provoquer une déviation de ladite trajectoire par effet fluidique en vue d'influencer favorablement le triangle des vitesses d'attaque de l'étage ou aubage mobile de la roue de turbine, sous un angle α adapté sélectivement, de façon éventuellement variable, en fonction du point actuel de fonctionnement de la turbine. On améliore ainsi sensiblement le profil de vitesse de celle-ci, ce qui accroît encore l'efficacité du recyclage d'air chaud. A cet effet, le conduit de dérivation 13 est branché, par son extrémité aval, éventuellement de façon arbitrairement orientable ou angulairement réglable, sur la volute 28 de liaison directe d'au moins un collecteur d'échappement 4 du moteur 1 avec uu moins une turbine 8, sensiblement au point de raccordement de la tubulure d'entrée rectiligne 28a de la volute à l'extrémité adjacente de la voie de passage courbe dans cette volute. Ce branchement peut être réalisé au moyen d'une tubulure ou analogue 29 par exemple articulée de façon pivotante en 30 à la volute 28.

Par ailleurs, les principes de l'invention, exposés ci-dessus pour le mode de réalisation des figures 3 à 5 à turbine axiale, sont transposables dans leur application à des turbines du type centripède pour influencer favorablement le triangle des vitesses.

## Revendications

1. Procédé de production d'énergie par un générateur de puissance comprenant: un système moteur volumétrique à combustion interne à pistons, un système compresseur d'air de suralimentation et un système turbomoteur à gaz d'échappement, avec des couplages mécaniques et/ou pneumatiques entre ces trois systèmes: ledit procédé étant du type consistant à prélever un débit dérivé d'air comprimé entre les systèmes respectivement compresseur et volumétrique sur le débit total d'air comprimé refoulé par ledit système compresseur, et à ajouter ledit débit dérivé comprimé aux gaz d'échappement du système moteur, entre la sortie de gaz des cylindres de celui-ci et avant la sortie de gaz du système turbomoteur, ainsi qu'à fournir un apport d'énergie, récupérée sur de l'énergie en provenance des gaz brûlés dans le système moteur volumétrique, aux gaz d'échappement par l'intermédiaire du débit dérivé d'air comprimé, caractérisé en ce que l'apport d'énergie audit débit dérivé d'air comprimé s'effectue sous forme de chaleur et de force vive massique par mélange direct du débit dérivé d'air comprimé avec une partie du flux de gaz sortant du système turbomoteur, notamment par effet de trompe aspirant et entraînant ledit gaz par ledit air comprimé agissant sous forme d'au moins un jet d'air.

2. Procédé selon la revendication 1, caractérisé en ce qu'au moins une partie du débit dérivé d'air comprimé, pourvu de l'apport d'énergie précité, est injectée sous un angle éventuellement variable sélectivement dans la volute de raccordement direct entre au moins un collecteur d'échappement du système moteur volumétrique et au moins une turbine du système turbomoteur, sensiblement au point de raccordement tangent de la trajectoire d'entrée des gaz d'échappement dans la volute avec le début de leur trajectoire courbe dans celle-ci, de façon à provoquer une déviation de ladite trajectoire par effet fluidique.

3. Système générateur de puissance pour l'exécution du procédé selon au moins l'une des revendications précédentes, du type comprenant: un conduit de dérivation (13) reliant la conduite (10) de refoulement d'air comprimé du système compresseur (7) à la voie (12) d'écoulement des gaz d'échappement du système moteur volumétrique (1) après la sortie de ceux-ci des cylindres moteur (2) et un dispositif (27) de récupération d'énergie en provenance des gaz brûlés du système moteur volumétrique (1) et de transfert de cette énergie récupérée à une partie du flux d'air comprimé, ce dispositif étant traversé par une voie de passage d'air comprimé en dérivation (13), caractérisé en ce que ledit dispositif de récupération et de transfert d'énergie est constitué par au moins un éjecteur (27) dont la tubulure d'aspiration de fluide entraîné (27b) est branchée sur une conduite (15) de sortie de gaz du système turbomoteur (8).

4. Système selon la revendication 3, caractérisé en ce que le conduit de dérivation (13) précité est branché par son extrémité aval éventuellement de façon sélectivement orientable ou angulairement réglable sur la volute (28) de liaison directe d'au moins un collecteur d'échappement (4) du système moteur volumétrique (1) avec au moins une turbine du système turbomoteur (8), sensiblement au point de raccordement de la tubulure d'entrée rectiligne (28a) de la volute (28) à l'extrémité adjacente de la voie de passage courbe dans cette volute (28).

## Patentansprüche

1. Verfahren zur Erzeugung von Energie durch einen Krafterzeuger mit; einer volumetrischen Brennkraftmaschineneinrichtung mit Kolben, einer Aufladeluftverdichtungseinrichtung und einer Abgasturbinenmotoreinrichtung, mit mechanischen und/oder pneumatischen Koppelungen zwischen diesen drei Einrichtungen: wobei das besagte Verfahren derjenigen Gattung ist, die darin besteht, zwischen den jeweils Verdichtungs- und volumetrischen Einrichtungen eine abgeleitete Druckluftdurchsatzfördermenge der durch die besagte Verdichtungseinrichtung verdrängten Gesamtdruckluftdurchsatzfördermenge zu entnehmen und die besagte abgeleitete verdichtete Durchsatzfördermenge den Abgasen der Kraftmaschineneinrichtung zwischen dem Gasauslass der Zylinder derselben und vor dem Gasauslass der Turbinenmotoreinrichtung zuzufügen sowie eine Zufuhr von aus der von den in der volumetrischen Kraftmaschineneinrichtung verbrannten Gasen herrührenden Energie rückgewonnenen Energie den Abgasen über die abgeleitete Druckluftdurchsatzfördermenge zu liefern, dadurch gekennzeichnet, dass die Energiezufuhr zu der besagten abgeleiteten Druckluftdurchsatzfördermenge als Hitze und Massenbewegungsenergie durch unmittelbare Mischung der abgeleiteten Druckluftdurchsatzfördermenge mit einem Teil des aus der Turbinenmotoreinrichtung ausströmenden Gasflusses erfolgt, insbesondere durch das besagte Gas durch die besagte als wenigstens ein Luftstrahl wirkende Druckluft ansaugende und mitnehmende Gasstrahlpumpenwirkung.

2. Verfahren nach Anspruch 1, dadurch gekennzeichnet, dass mindestens ein Teil der mit der vorgenannten Energiezufuhr versehenen abgeleiteten Druckluftdurchsatzfördermenge unter einem gegebenenfalls wahlweise veränderlichen Winkel in das wenigstens eine Auspuffsammelleitung der volumetrischen Kraftmaschineneinrichtung mit mindestens einer Turbine der Turbinenmotoreinrichtung unmittelbar verbindende Spiralgehäuse eingesprizt wird, etwa an der Stelle des tangentialen Anschlusses der Bahn der in das Spiralgehäuse eintretenden Abgase an den Anfang deren gekrümmten Bahn in dem letzteren, um eine Ablenkung der besagten Bahn durch strömungstechnische Wirkung zu verursachen.

3. Krafterzeugungseinrichtung zur Durchführung des Verfahrens nach wenigstens einem der vorangehenden Ansprüche, derjenigen Bauart, bestehend aus: einer die Druckluftförderleitung der Verdichtungseinrichtung (7) mit der Strömungsbahn (12) der Abgase der volumetrischen Kraftmaschineneinrichtung (1) nach dem Ausgang derselben aus den Kraftzylindern (2) verbindenden Abzweigungsleitung (13) und einer Vorrichtung (27) zu Rückgewinnung von Energie aus den verbrannten Gasen der volumetrischen Kraftmaschineneinrichtung (1) und zur Ubertragung dieser rückgewonnenen Energie an einen Teil des Druckluftflusses, wobei diese Vorrichtung von einer abgeleiteten Druckluftdurchgangsbahn (13) durchsetzt wird, dadurch gekennzeichnet, dass die besagte Energierückgewinnungs- und Ubertragungsvorrichtung durch wenigstens einen Ejektor (27) gebildet wird, dessen Rohrstutzen (27b) zum Ansaugen des mitgenommenen fliessfähigen Mediums an eine Leitung (15) zum Austritt der Gase der Turbinenmotoreinrichtung (8) angeschlossen ist.

4. Einrichtung nach Anspruch 3, dadurch gekennzeichnet, dass die vorgenannte Abzweigungsleitung (13) mit ihrem ggf. wahlweise verschwenkbaren bzw. winkelmässig einstellbaren stromabwärts liegenden Ende an das Spiralgehäuse (28) zur unmittelbaren Verbindung wenigstens einer Auspuffsammelleitung (4) der volumetrischen Kraftmaschineneinrichtung (1) mit mindestens einer Turbine der Turbinenmotoreinrichtung (8) angeschlossen ist, im wesentlichen an der Stelle des Anschlusses des geraden Einlassrohrstutzens (28a) des Spiralgehäuses (28) an das benachbarte Ende der krummen Durchgangsbahn in diesem Spiralgehäuse (28).

## Claims

1. Method of producing energy by a power generator comprising: a volumetric internal combustion engine system with pistons, a supercharging air compressor system and an exhaust gas-driven turbo-motor system, with mechanical and/or pneumatic couplings between these three systems: the said method being of the type consisting in taking, between the compressor and volumetric systems, respectively, a diverted compressed air flow rate from the total compressed air flow rate discharged by the said compressor system and adding the said diverted compressed flow rate to the exhaust gases of the engine system between the gas outlet of the cylinders thereof and before the gas outlet of the turbomotor system, as well as supplying an input of energy, recovered from the energy derived from the gases burnt in the volumetric engine system, to the exhaust gases through the agency of the diverted compressed air flow rate, characterized in that the energy supply to the said diverted compressed air flow rate is effected in the form of heat and of kinetic mass energy through direct mixing of the diverted compressed air flow rate with a part of the gas flow exiting from the turbo-motor system, in particular through blast pump action and carrying the said gas along through the said compressed air acting as at least one air jet.

2. Method according to claim 1, characterized in that at least one portion of the diverted compressed air flow rate fed with the aforesaid energy supply is injected at a possibly selectively variable angle into the volute of direct connection between at least one exhaust manifold of the volumetric engine system and at least one turbine of the turbo-motor system, substantially at the point of tangential connection of the path of travel of the exhaust gases entering the volute to the beginning of their curved path of travel therein, so as to induce a deviation of the said path of travel through fluidic effect.

3. Power generating system for carrying out the method according to at least one of the foregoing claims, of the kind comprising: a tapping duct (13) connecting the compressed air discharge line (10) of the compressor system (7) to the exhaust gas flow path (12) of the volumetric engine system (1) after the egress thereof from the power cylinders (2) and a device (27) for recovering energy from the burnt gases of the volumetric engine system (1) and for transferring this recovered energy to one part of the compressed air flow, a diverted compressed air passage-way (13) extending through this device, characterized in that the said energy recovery and transfer device consists of at least one ejector (27) the entrained fluid suction port (27b) of which is branched off a gas outlet duct (15) of the turbo-motor system (8).

4. System according to claim 3, characterized in that the aforesaid tapping duct (13) is connected with its possibly selectively swivelling or angularly adjustable downstream end to the volute (28) of direct connection of at least one exhaust manifold (4) of the volumetric engine system (1) to at least one turbine of the turbo-motor system (8), substantially at the point of connection of the straight input nipple (28a) of the volute (28) to the adjacent end of the curved passageway within this volute (28).

Fig. 1

Fig. 2

**Fig 3**

IX ↑ 15

28a

29

28

IX

**Fig 4**

15 ↑

28a 29 17 13

9

30 16

8a

8 28

8d

17 13

16

29

30

28

28a

360° 8d

**Fig 5**